# EUROPÄISCHE PATENTANMELDUNG

(11) **EP 2 942 371 A1**
(43) Veröffentlichungstag der Anmeldung: **11.11.2015**
(21) Anmeldenummer: 15165758.2
(22) Anmeldetag: 29.04.2015
(51) Int. Cl.: C08L 91/06, C08K 5/10

(54) **WACHSDEHNSTOFF**

(30) Priorität: 05.05.2014 DE 102014208355
(71) Anmelder: Behr Thermot-tronik GmbH, 70806 Kornwestheim (DE)
(72) Erfinder: Seizer, Thomas, 70806 Kornwestheim (DE); Mittmann, Gabriele, 71696 Möglingen (DE)
(74) Vertreter: BRP Renaud & Partner mbB Rechtsanwälte Patentanwälte Steuerberater

(57) **Zusammenfassung**

Die Erfindung betrifft einen Wachsdehnstoff, insbesondere zur temperaturabhängigen Steuerung eines Ventils in einem Kühlkreislauf, mit folgenden Bestandteilen, zumindest zwei Wachskomponenten und zumindest einem Füllstoff.

Hierdurch können die Reaktionszeit des Wachsdehnstoffes und die Schaltzeiten gezielt beeinflusst, insbesondere deutlich reduziert werden.

## Beschreibung

Die vorliegende Erfindung betrifft einen Wachsdehnstoff, insbesondere zur temperaturabhängigen Steuerung eines Ventils in einem Heiz-/Kühlkreislauf. Die Erfindung betrifft außerdem ein Verfahren zur Herstellung eines derartigen Wachsdehnstoffes.

Wachsdehnstoffe sind seit längerem zur selbstregulierenden Steuerung von Heiz-/Kühlkreisläufen bekannt und werden beispielsweise in Ventileinrichtungen eingesetzt, um den Ventilkörper temperaturabhängig zu öffnen bzw. zu schließen. In der Regel ist dabei zur Steuerung des Ventils ein Wachsdehnstoffelement vorgesehen, welches aus einer Dose, einem darin translatorisch verstellbaren Arbeitskolben sowie dem Wachsdehnstoff besteht. Durch Temperaturänderung findet ein materialabhängiger Phasenübergang statt, bei welchem der Wachsdehnstoff eine signifikante Volumenänderung erfährt, die wiederum eine Bewegung des Kolbens bewirkt, der mit dem Ventilkörper verbunden ist, so dass bei einer Kolbenbewegung das Ventil mehr geöffnet oder mehr geschlossen wird. Zur Rückstellung des Kolbens ist üblicherweise ein Federmechanismus vorgesehen. Durch die Mischung verschiedener niedriger bis hochschmelzender Wachskomponenten kann über einen entsprechenden Temperaturbereich ein zugehöriger Hubbereich definiert werden. Die Temperatur für den Beginn der Hubentfaltung wird dabei durch die jeweils verwendeten Wachskomponenten vorgegeben. Selbstverständlich ist der Einsatz derartiger Wachsdehnelemente nicht nur auf Kühlkreisläufe in Kraftfahrzeugen beschränkt, sondern ist beispielsweise auch bei anderen Thermostatventilen, wie beispielsweise an einem Heizkörper, zu finden.

Problematisch bei den bekannten Wachsdehnstoffen ist jedoch, dass für die Phasenumwandlung bei typisch konstanter Temperatur Wärmeenergie benötigt wird, so dass der Schaltvorgang solange dauert wie der hierfür benötigte Wärmefluss. Hierdurch ist insbesondere ein schnelles temperaturabhängiges Schalten/Reagieren nicht oder nur bedingt möglich.

Die vorliegende Erfindung beschäftigt sich daher mit dem Problem, einen verbesserten Wachsdehnstoff anzugeben, mittels welchem insbesondere eine Reaktions- und damit Schaltzeit beeinflusst, insbesondere deutlich verkürzt, werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen Wachsdehnstoff zu schaffen, der zumindest zwei Wachskomponenten aufweist, ebenso wie zumindest einen Füllstoff, der aufgrund seiner höheren Wärmeleitfähigkeit eine schnellere Schaltzeit eines mit einem derartigen Wachsdehnstoff ausgestatteten Thermostatventils ermöglicht. Als Füllstoff kann beispielsweise Kupfer, Aluminium, Aluminiumoxid oder Graphit verwendet werden, welche die Temperaturänderungen signifikant beschleunigen und somit eine schnellere und zugleich gleichmäßigere Volumenänderung der Wachskomponenten bewirken, so dass durch eine entsprechende Beimischung eines Füllstoffanteils die Reaktionszeit des erfindungsgemäßen Wachsdehnstoffs signifikant beeinflusst, insbesondere signifikant gesenkt werden kann. Als Graphit kann expandiertes Graphit verwendet werden, ebenso wie jegliche andere Art von Kohlefasern. Expandiertes Graphit beispielsweise ist nicht nur leicht, sondern besitzt auch eine außerordentlich gute thermische Leitfähigkeit, wodurch ein schnelles Ansprechverhalten des Wachsdehnstoffes gewährleistet werden kann. Das expandierte Graphit kann dabei in Form von Graphitpulver oder aber in Form von Fasern vorliegen. Mit der Wahl des Füllstoffs wird die Reaktionszeit des Wachsdehnstoffes beeinflusst. Wichtig bei sämtlichen Wachsdehnstoffvarianten ist, dass der Füllstoff möglichst homogen mit den Wachskomponenten eingebettet und von diesen benetzt ist. Nur hierdurch ist bei einer entsprechenden Temperaturänderung auch eine homogene, das heißt gleichmäßige Volumenänderung und damit ein genaues Steuern des Ventils möglich.

Bei einer bevorzugten Weiterbildung der erfindungsgemäßen Lösung weist der Füllstoff beispielsweise Kupfer auf. Kupfer besitzt eine hervorragende Wärmeleitfähigkeit, die oberhalb der Wärmeleitfähigkeit von Aluminiumoxid und dessen Wärmeausdehnungskoeffizienten unterhalb des Wärmeausdehnungskoeffizienten von Aluminium liegt. Selbstverständlich ist dabei nicht nur die Beimischung der genannten Metalle denkbar, sondern auch anderer Metalle mit wiederum unterschiedlichen Wärmeausdehnungskoeffizienten, wodurch je nach beigemischtem Füllstoff die Reaktionsgeschwindigkeit des Wachsdehnstoffes beeinflussbar ist. Auch die Menge des jeweils beigemischten Füllstoffes spielt hierbei natürlich eine Rolle.

Bei einer vorteilhaften Weiterbildung der erfindungsgemäßen Lösung enthält der Wachsdehnstoff zwischen 35 bis 55 Gew.-% expandiertes Graphit. Die zwei Wachskomponenten können in jedem beliebigen Verhältnis vorliegen. Die erste Wachskomponente kann kurzkettige Alkane mit einem niedrigen Schmelzpunkt von ca. 40°C aufweisen, wogegen die zweite Wachskomponente langkettige Alkane mit einen hohen Schmelzpunkt von ca. 87 °C aufweist. Durch die individuelle Mischung der verschiedenen Wachskomponenten ist insbesondere der Hubbeginn individuell einstellbar, so dass dieser auf Kundenwunsch hin angepasst werden kann.

Die Erfindung beruht weiter auf dem allgemeinen Gedanken, den zuvor beschriebenen Wachsdehnstoff mittels eines Extrudierverfahrens herzustellen, bei welchem die Komponenten des Wachsdehnstoffes gemischt und zumindest temporär temperiert, insbesondere erwärmt werden. Durch das spezielle Extrudierverfahren, bei welchem die Wachskomponenten und der zumindest eine Füllstoff äußerst wirkungsvoll und homogen miteinander vermischt werden, kann eine knetartige Konsistenz erreicht werden, die sich auch bei längerer Lagerzeit nicht selbstständig entmischt. Durch das spezielle Extrudierverfahren kann ein höherer Füllstoffanteil verarbeitet werden als z.B. beim Dispergierverfahren.

Bei bisher aus dem Stand der Technik bekannten Wachsdehnstoffen waren längere Lagerzeiten mit wenig Füllstoffanteilen aufgrund der stattfindenden Entmischung kritisch. Durch die knetartige Konsistenz des erfindungsgemäßen Wachsdehnstoffes lässt sich dieser auch beispielsweise in gewisse feste Formen pressen, wodurch eine vergleichsweise einfache Handhabung des Wachsdehnstoffes möglich wird. Durch einen gepressten und festen Wachsdehnstoff kann dieser zusätzlich äußerst genau in dafür vorgesehene Volumenräume, beispielsweise in einem Ventil, eingesetzt werden, ohne dass die Ausdehnung behindernde Lufteinschlüsse oder Verschmutzung einer Dichtfläche, wie beispielsweise bei der Verwendung von flüssigen Wachsdehnstoffen, befürchtet werden müssen.

Bei einer vorteilhaften Weiterbildung des erfindungsgemäßen Verfahrens, kann dem Wachsdehnstoff bzw. dem darin verwendeten Füllstoff ein Verstärkerfüllstoff, beispielsweise ein anorganischer sauerstoffsäurehaltiger Verstärkerfüllstoff, zugesetzt werden. Ein derartiger Verstärkerfüllstoff verhindert beispielsweise ein Absetzen des Füllstoffes, insbesondere von Aluminiumoxid, und zwar unabhängig vom Aggregatszustand der Wachskomponenten, wodurch die Homogenität des erfindungsgemäßen Wachsdehnstoffes über die Lebensdauer verbessert werden kann. Eine optimale Homogenität gewährleistet ein späteres optimales Reagieren des Wachsdehnstoffes auf Temperaturänderungen und ein kalkulierbares Schaltverhalten eines damit ausgestatteten Thermostatventils.

## Patentansprüche

1. Wachsdehnstoff, insbesondere zur temperaturabhängigen Steuerung eines Ventils in einem Heiz-/Kühlkreislauf, mit folgenden Bestandteilen, zumindest zwei Wachskomponenten und zumindest einem Füllstoff.

2. Wachsdehnstoff nach Anspruch 1,
**dadurch gekennzeichnet, dass**
der Füllstoff Graphit, insbesondere expandiertes Graphit, Kohlenstofffasern, Aluminium, Aluminiumoxid und/oder Kupfer aufweist.

3. Wachsdehnstoff nach Anspruch 1 oder 2,
**dadurch gekennzeichnet, dass**
der Wachsdehnstoff zwischen 35 bis 55 Gew.-% Füllstoff, insbesondere, und mindestens zwei Wachskomponenten enthält.

4. Wachsdehnstoff nach Anspruch 1 oder 2,
**dadurch gekennzeichnet, dass**
der Wachsdehnstoff zwischen 35 bis 55 Gew.-% Füllstoff, insbesondere Graphit enthält, zwischen 5 bis 20 Gew.-% der ersten Wachskomponente und zwischen 25 bis 60 Gew.-% der zweiten Wachskomponente enthält.

5. Wachsdehnstoff nach einem der vorhergehenden Ansprüche,
**dadurch gekennzeichnet, dass**
die zumindest eine Wachskomponente kurzkettige Alkane mit einem niedrigen Schmelzpunkt und eine Wachskomponente langkettige Alkane mit einen hohen Schmelzpunkt aufweist.

6. Wachsdehnstoff nach einem der vorhergehenden Ansprüche,
**dadurch gekennzeichnet, dass**
der Wachsdehnstoff und/oder der Füllstoff einen Verstärkerfüllstoff, beispielsweise einen anorganischen sauerstoffsäurehaltigen Verstärkerfüllstoff, aufweist.

7. Verfahren zur Herstellung eines Wachsdehnstoffes nach einem der vorhergehenden Ansprüche, bei dem die zumindest zwei Wachskomponenten und der zumindest eine Füllstoff gemischt, temperiert und extrudiert werden.

8. Verfahren nach Anspruch 6,
**dadurch gekennzeichnet,**
**dass** als Füllstoff Graphit, insbesondere expandiertes Graphit, Kohlefasern, Aluminium, Aluminiumoxid und/oder Kupfer verwendet wird.

9. Verfahren nach einem der Ansprüche 6 bis 8,
**dadurch gekennzeichnet,**
**dass** die Poren des Füllstoffs während des Mischens und Extrudierens zumindest teilweise gefüllt werden.
